# EUROPÄISCHE PATENTANMELDUNG

(11) **EP 1 447 036 A2**
(43) Veröffentlichungstag der Anmeldung: **18.08.2004**
(21) Anmeldenummer: 04002814.4
(22) Anmeldetag: 09.02.2004
(51) Int. Cl.: A47J 39/02

(54) **Vorrichtung zum Erwärmen von Geschirrteilen**

(30) Priorität: 13.02.2003 DE 20302352 U
(71) Anmelder: Abstreiter, Tobias, 85414 Kirchdorf (DE)
(72) Erfinder: Abstreiter, Tobias, 85414 Kirchdorf (DE)
(74) Vertreter: Wächter, Jochen (DE)

(57) **Zusammenfassung**

Die Erfindung betrifft eine Vorrichtung (1) zum Erwärmen und/oder Warmhalten von Geschirrteilen, insbesondere Tellern, mit einer haubenförmigen Außenwandung (3), welche einen Haubeninnenraum umgibt, in dem ein zur Aufnahme von Geschirrteilen geeigneter erster Hohlraum (9) angeordnet ist, der von einer bevorzugt zylinder- oder kegelstumpfförmigen Innenwandung (10) umgeben ist, wobei der erste Hohlraum (9) von einem zweiten Hohlraum (12) umgeben ist, der zumindest teilweise zwischen der Innenwandung (10) und der Außenwandung (3) ausgebildet ist, wobei der erste Hohlraum (9) an seiner oberen Stirnseite über einen Ventilator (17) sowie an seinen Längsseiten über Luftdurchtrittsöffnungen (16) in der Innenwandung (10) mit dem zweiten Hohlraum (12) verbunden ist, und wobei die Vorrichtung (1) eine Heizvorrichtung (21, 29) aufweist, die geeignet ist, die zu zirkulierende Luft im Haubeninnenraum zu erwärmen.

## Beschreibung

Die Erfindung betrifft eine Vorrichtung zum Erwärmen bzw. Warmhalten von Geschirrteilen, insbesondere von Tellern.

Vorgewärmte Geschirrteile verhindern eine unerwünschte Temperaturabnahme der Speisen. Besonders bei Buffets und in der gehobenen Gastronomie ist es wünschenswert, die Teller bis kurz vor Gebrauch warmzuhalten.

Hierzu werden üblicherweise Tellerwärmer eingesetzt, die in Form eines fahrbaren Wagens ausgebildet sind und einen oder mehrere Tellerstapel umfassen. Gesteuert über eine geeignete Federvorrichtung ragt jeweils eine vorbestimmte, von der Höhe des Stapels unabhängige Anzahl an Tellern aus dem Wagen nach oben heraus, und die Teller können dort abgenommen werden. Im Inneren des Wagens ist eine Heizvorrichtung angebracht, welche die Teller warmhält bzw. aufwärmt, bis sie sich im oberen Bereich des Stapels befinden und nach oben aus dem Gehäuse herausragen.

Eine derartige Vorrichtung ist etwa aus der DE 28 39 925 C2 bekannt. Die Geschirrstapel sind jeweils in einem Hohlraum angeordnet, der von einem zylindrischen Innenmantel umschlossen wird. Die Erwärmung der Geschirrstapel erfolgt über ein Gebläse, das durch im Innenmantel angeordnete Luftansaugöffnungen Luft aus dem Hohlraum saugt und anschließend die durch eine Heizung erwärmte Luft wieder mittels eines Verteilelements in den Hohlraum einströmen lässt. Derartige Vorrichtungen besitzen mehrere Nachteile. Zum einen sind sie sehr unhandlich und lassen sich nur schwer transportieren. Diese Faktoren verhindern einen Einsatz im Rahmen eines Partyservice und machen sich nachteilig bemerkbar, wenn aus Platzgründen oder - besonders in Feinschmeckerlokalen - aus ästhetischen Gesichtspunkten keine feststehenden Wägen erwünscht sind. Damit sind Vorrichtungen gemäß der DE 28 39 925 C2 für einen flexiblen Einsatz überhaupt nicht geeignet. Zudem wird durch die konstruktionsbedingte Einführung der Luft an lediglich einer Stelle des Innenmantels das Geschirr unterschiedlich stark erhitzt.

Eine flexiblere Vorrichtung zum Aufwärmen von Tellern ist in der DE 296 03 212 U1 gezeigt. Die Vorrichtung umfasst einen glockenförmigen Körper, der über die zu erwärmenden Geschirrstücke gestülpt wird, und in dessen oberem Bereich eine Heizvorrichtung angeordnet ist, die von oben die Teller erwärmt. Auch der Einsatz eines Ventilators wird als Möglichkeit erwähnt. Eine solche Vorrichtung ist jedoch nicht zur schnellen Erwärmung von Tellern geeignet. Selbst bei sehr hoher Heizstrahlung würde eine Erwärmung des gesamten Innenraums zumindest sehr lange dauern. Hinzu kommt, daß bei einem Stapel aus mehreren Tellern lediglich die oberen etwas erwärmt werden, während im unteren Bereich der Glocke kaum eine Erwärmung stattfindet.

Der vorliegenden Erfindung liegt daher die Aufgabe zugrunde, eine Vorrichtung zum Erwärmen von Geschirrteilen, insbesondere Tellern, zu schaffen, die innerhalb kurzer Zeit auch eine Vielzahl von Tellern gleichmäßig erwärmt, wenig Platz beansprucht, flexibel einsetzbar ist und leicht transportiert werden kann.

Diese Aufgabe wird durch eine Vorrichtung gemäß den Merkmalen des Anspruchs 1 gelöst.

Eine solche Vorrichtung zum Erwärmen und/oder Warmhalten von Geschirrteilen, insbesondere Tellern, weist eine haubenförmige Außenwandung auf, welche einen Haubeninnenraum umgibt, in dem ein zur Aufnahme von Geschirrteilen geeigneter erster Hohlraum angeordnet ist, der von einer bevorzugt zylinder- oder kegelstumpfförmigen Innenwandung umgeben ist, wobei der erste Hohlraum von einem zweiten Hohlraum umgeben ist, der zumindest teilweise zwischen der Innenwandung und der Außenwandung ausgebildet ist, wobei der erste Hohlraum an seiner oberen Stirnseite über einen Ventilator sowie an seinen Längsseiten über Luftdurchtrittsöffnungen in der Innenwandung mit dem zweiten Hohlraum verbunden ist. Außerdem weist die Vorrichtung eine Heizvorrichtung auf, die geeignet ist, die zu zirkulierende Luft im Haubeninnenraum zu erwärmen.

Eine derartige Vorrichtung kann jederzeit flexibel eingesetzt werden, ist leicht zu transportieren und auch für ein kurzfristiges Aufwärmen von Tellern geeignet, wobei eine Vielzahl an Tellern schnell und gleichmäßig erwärmt werden kann.

Vorteilhafterweise sind im zweiten Hohlraum bevorzugt Luftablenkelemente angeordnet, die geeignet sind, die vom Ventilator ausgeblasene Luft in Richtung der Luftdurchtrittsöffnungen in der Innenwandung zu lenken, so daß die Verteilung der erwärmten Luft noch weiter optimiert wird.

Die Heizvorrichtung besteht bevorzugt aus mindestens einer ringförmig angeordneten Heizwendel oder einer Heizröhre im zweiten Hohlraum, was den Vorteil liefert, daß eine enorme Heizleistung gleichmäßig abgestrahlt wird, und die erwärmte Luft auf kürzestem Weg zu den Luftdurchtrittsöffnungen im Innenmantel geführt werden kann.

Indem die Vorrichtung bevorzugt eine Bodenplatte aufweist, die mittels Halteklammern mit der Außenwandung lösbar verbunden ist, kann die Vorrichtung einschließlich Tellern sicher und leicht transportiert werden.

Bevorzugt ist eine Wärmespeichereinrichtung vorgesehen, die eine Heizwirkung ohne Stromzufuhr gewährleistet, wodurch die Flexibilität der Vorrichtung noch erhöht wird.

Die Außenwandung weist vorzugsweise ein wärmeisolierendes Material auf, so daß die Wärmeverluste nach außen minimiert werden.

Vorzugsweise erweitern sich Innenwandung und Außenwandung nach unten hin konisch, was die Vorteile liefert, daß die erwärmte Luft im zweiten Hohlraum an der Wand entlang besonders gut auch in die unteren Bereiche der Vorrichtung vordringt, und mehrere Vorrichtungen aufeinandergestapelt werden können.

Vorteilhafterweise weist die Vorrichtung einen Wärmesensor auf, der die Stromzufuhr zur Heizvorrichtung bei Bedarf abschaltet und somit Strom spart.

Weitere Merkmale, Einzelheiten und Vorteile der vorliegenden Erfindung ergeben sich aus der nachfolgenden Beschreibung unter Bezugnahme auf die Zeichnungen. Darin zeigt:
- Fig. 1: einen Axialschnitt durch eine erste Ausführungsform der erfindungsgemäßen Vorrichtung;
- Fig. 2: einen Axialschnitt durch eine zweite Ausführungsform der erfindungsgemäßen Vorrichtung; und
- Fig. 3: einen Schnitt durch eine spezielle Bodenplatte gemäß der Erfindung.

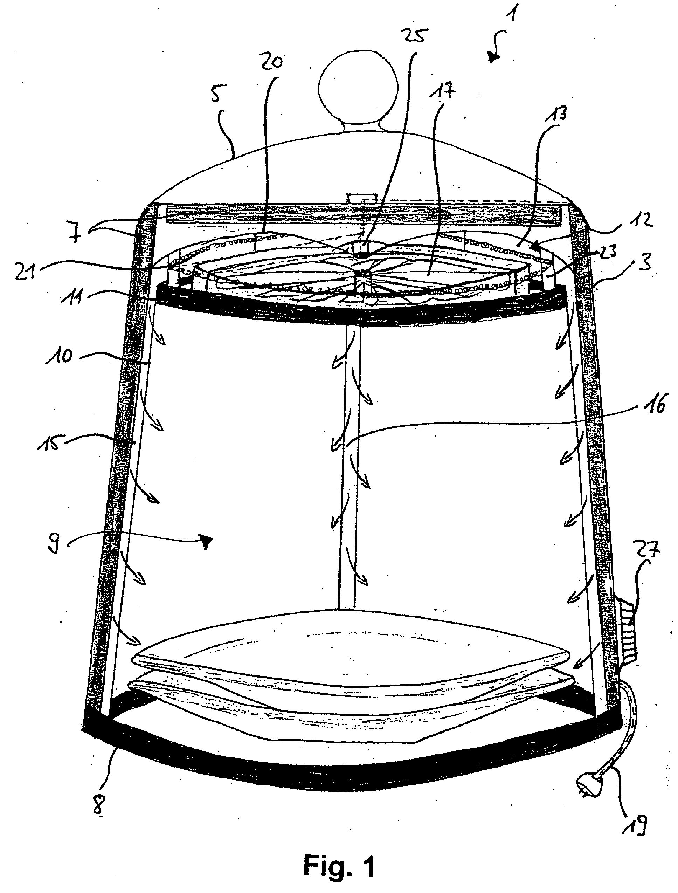

In Fig. 1 ist eine erste Ausführungsform der erfindungsgemäßen Vorrichtung 1 zum Erwärmen bzw. Warmhalten von Tellern gezeigt. Sie weist eine haubenförmige Außenwandung 3 auf, die einen Haubeninnenraum definiert und über die zu erwärmenden Teller gestülpt werden kann. Die Außenwandung 3 weist eine Außenhaut 5 auf, die bevorzugt aus Edelstahl gebildet ist. Zusätzlich kann die Außenwandung 3 eine Schicht aus wärmeisolierendem Material 7 aufweisen, um Wärmeverluste nach außen zu verringern. Im dargestellten Beispielsfall ist eine obere Isolierung nicht direkt an der Außenwandung 3, sondern horizontal im Haubeninnenraum angeordnet. Am unteren Ende der Außenwandung 3 ist ein diese umgebender Stützring 8, bevorzugt aus Kunststoff, angeordnet.

Die Teller selbst werden in einem ersten Hohlraum 9 aufgenommen, der von einer zylinder- bzw. kegelstumpfförmigen Innenwandung 10 umgeben ist. Die Innenwandung 10 kann aus einem Stück gefertigt sein, besteht aber in der gezeigten Ausführungsform aus vier einzelnen Blechen aus Aluminium, die an ihrem oberen Ende ebenfalls mit einem umlaufenden Stützring 11 aus Kunststoff verbunden sind.

Ein zweiter Hohlraum 12 ist ebenfalls im Haubeninnenraum angeordnet. Im bevorzugten Ausführungsbeispiel weist er zwei Abschnitte auf, eine im oberen Bereich der Haube angeordnete Umluftkammer 13 und einen umlaufenden Umluftkanal 15, der sich zwischen seitlicher Außenwandung 3 und Innenwandung 10 erstreckt. Der Umluftkanal 15 und somit der zweite Hohlraum 12 ist mit dem ersten Hohlraum 9 über Luftdurchtrittsöffnungen 16 verbunden, die in der Innenwandung 10 ausgebildet sind. Im vorliegenden Beispiel werden die Luftdurchtrittsöffnungen 16 von Schlitzen gebildet, die zwischen den Blechen der Innenwandung 10 entstehen. Eine weitere Verbindung zwischen erstem 9 und zweitem 12 Hohlraum im Bereich der Umluftkammer 13 wird durch einen Ventilator 17 geschaffen, der Luft aus dem ersten Hohlraum 9 ansaugen und in die Umluftkammer 13 blasen kann. Der Ventilator 17 wird mittels eines Netzsteckers 19 mit Netzstrom versorgt. In der Umluftkammer 13 ist eines oder mehrere Luftablenkelemente 20 vorgesehen, die die vom Ventilator 17 in die Umluftkammer 13 eingeblasene Luft in Richtung des Umluftkanals 15 leiten. Im vorliegenden Beispiel wird als Luftablenkelement 20 ein haubenförmiges Kunststoffelement verwendet, das im oberen Bereich der Umluftkammer 13 angeordnet ist und die Luft in Richtung des Umluftkanals 15 in allen Richtungen radial nach außen leitet. Das Luftablenkelement 20 weist zur Mitte hin eine nach unten gerichtete Spitze auf, so daß im Querschnitt zwei konkave Wölbungen sichtbar sind, die zur Luftführung nach außen dienen. Ebenfalls in der Umluftkammer 13 ist eine Heizeinrichtung 21 vorgesehen, die z.B. als ringförmige Heizwendel oder Heizröhre ausgebildet sein kann, welche im Außenbereich der Umluftkammer 13 umlaufend angeordnet ist und durch Stützelemente 23 aus Stahl gehalten wird. Es können aus Sicherheitsgründen auch mehrere Heizwendeln oder Heizröhren verwendet werden. Im oberen Bereich der Umluftkammer 13 ist ein Wärmesensor 25 vorgesehen, der zentrisch am Luftablenkelement 20 montiert ist. Ein Wärmeregler 27 kann an der Außenwandung 3 angebracht sein.

Das Erwärmen von gestapelten Tellern mit der erfindungsgemäßen Vorrichtung läuft folgendermaßen ab. Die nach unten hin offene Vorrichtung 1 wird wie eine Glocke über den zu wärmenden Tellerstapel gestülpt. Mittels des Ventilators 17 wird die Luft aus dem ersten Hohlraum 9, in dem sich die Teller befinden, in die Umluftkammer 13 gesogen. Das über dem Ventilator 17 montierte Luftablenkelement 20 bewirkt eine gerichtete Bewegung der Luft radial nach außen, so daß die Luft durch die umlaufende Heizwendel 21 aufgeheizt werden kann. Die erwärmte Luft wird über den Umluftkanal 15 weiterbefördert und gelangt über die Luftdurchtrittsöffnungen 16 wieder zurück in den ersten Hohlraum 9. Die aufgenommene Wärme wird an die Teller abgegeben und die erkaltete Luft erneut in die Umluftkammer 13 befördert. Durch die bevorzugt sich nach unten hin konisch erweiternde Form der Außen- und Innenwandung 3, 10 verläuft der Luftstrom im Umluftkanal 15 stark an dessen äußerem Rand, so daß erwärmte Luft an der Außenwandung 3 nach unten strömt und auch im unteren Bereich des ersten Hohlraums 9 in diesen hineingesaugt wird. Dadurch wird eine gleichmäßige und schnelle Erwärmung vieler Teller ermöglicht. Der Wärmesensor 25 misst ständig die Temperatur der beförderten Luft und schaltet bei Bedarf die Stromzufuhr zur Heizwendel 21 ab. Gegebenenfalls kann die gewünschte Temperatur durch den Wärmeregler 27 vorab eingestellt werden. Aufgrund der sich nach unten hin konisch erweiternden Form von Außenwandung 3 und Innenwandung 10 können mehrere Vorrichtungen 1 übereinander gestapelt und dabei beträchtlich ineinandergesteckt werden, was den Platzbedarf bei der Lagerung oder beim Transport nochmals erheblich reduziert.

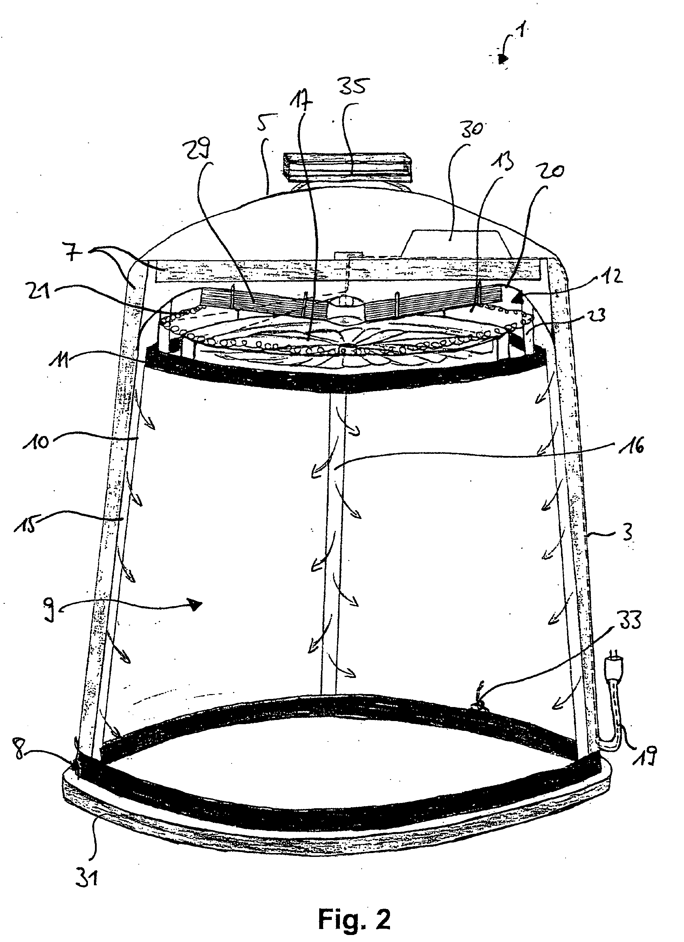

Fig. 2 zeigt eine weitere Variante der erfindungsgemäßen Vorrichtung 1, die auch zum stromlosen Betrieb und besonders für die Verwendung im Rahmen eines Partyservice geeignet ist. Weitestgehend sind die Ausführungsformen identisch. Jedoch sind am Luftablenkelement 20 Wärmespeicher 29 montiert, die vor Betrieb der Vorrichtung am Netz mittels der Heizwendel 21 auf eine hohe Temperatur aufgeheizt werden. Beim Betrieb kann die so gespeicherte Wärme ohne externe Stromversorgung an die Teller abgegeben werden. Der Ventilator 17 wird hierbei von einem Akkumulator 30 gespeist, der ebenfalls zuvor am Netz aufgeladen wurde.

Einen weiteren Aspekt dieser Ausführungsform liefert eine Bodenplatte 31, auf der die Teller abgestellt werden können, bevor die Haube darübergestülpt wird. Die Bodenplatte 31 ist vorzugsweise isoliert und mittels umseitig montierter Halteklammern 33 mit der Außenwandung 3 verbindbar. Dadurch wird die Vorrichtung 1 einschließlich Tellern transportfähig, ein an der Spitze der haubenförmigen Außenwandung 3 angebrachter Tragegriff 35 ermöglicht ein leichtes Tragen der gesamten Vorrichtung 1. Die Bodenplatte 31 kann selbst beheizt sein. Eine entsprechende Bodenplatte 31 ist natürlich auch bei der ersten Ausführungsform einsetzbar.

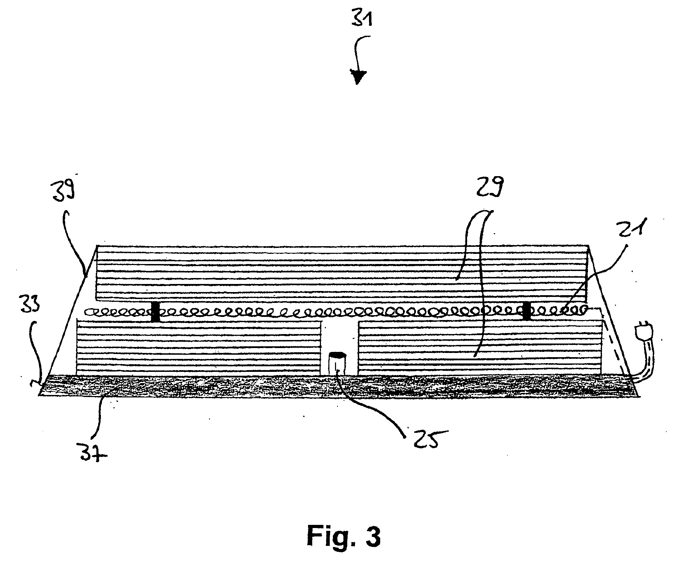

Fig. 3 zeigt schließlich eine alternative Bodenplatte 31, die ebenfalls ohne Netzstrom als Heizeinrichtung verwendet werden kann. Auf einem Unterboden aus wärmeisolierendem Material 37 sind Wärmespeicher 29 angeordnet, die seitlich von einer Wandung 39 aus Edelstahl umgeben sind. Zwischen den Wärmespeichern 29 ist eine ringförmig angeordnete Heizwendel 21 montiert, ein eventuell vorhandener Wärmesensor 25 liefert die Temperatur im Bereich der Wärmespeicher 29. Die Luft in der Haube wird wie üblich durch den Ventilator 17 zirkuliert. Diese Bodenplatte 31 kann vor allem zum Warmhalten von Tellern die oben dargestellten Heizeinrichtungen ersetzen oder in Kombination mit diesen eingesetzt werden.

Es ist auch denkbar, unter Verwendung des erfinderischen Prinzips andere bekannte Heizeinrichtungen zu verwenden oder die Geometrie der Anordnung leicht zu verändern.

## Patentansprüche

1. Vorrichtung (1) zum Erwärmen und/oder Warmhalten von Geschirrteilen, insbesondere Tellern, mit einer haubenförmigen Außenwandung (3), welche einen Haubeninnenraum umgibt, in dem ein zur Aufnahme von Geschirrteilen geeigneter erster Hohlraum (9) angeordnet ist, der von einer bevorzugt zylinder- oder kegelstumpfförmigen Innenwandung (10) umgeben ist, wobei der erste Hohlraum (9) von einem zweiten Hohlraum (12) umgeben ist, der zumindest teilweise zwischen der Innenwandung (10) und der Außenwandung (3) ausgebildet ist, wobei der erste Hohlraum (9) an seiner oberen Stirnseite über einen Ventilator (17) sowie an seinen Längsseiten über Luftdurchtrittsöffnungen (16) in der Innenwandung (10) mit dem zweiten Hohlraum (12) verbunden ist, und wobei die Vorrichtung (1) eine Heizvorrichtung (21, 29) aufweist, die geeignet ist, die zu zirkulierende Luft im Haubeninnenraum zu erwärmen.

2. Vorrichtung (1) nach Anspruch 1, **dadurch gekennzeichnet, daß** im zweiten Hohlraum (12) mindestens ein Luftablenkelement (20) angeordnet ist, das geeignet ist, die vom Ventilator (17) ausgeblasene Luft in Richtung der Luftdurchtrittsöffnungen (16) in der Innenwandung (10) zu lenken.

3. Vorrichtung (1) nach Anspruch 1 oder 2, **dadurch gekennzeichnet, daß** die Heizvorrichtung als im zweiten Hohlraum (12) angeordnete, ringförmige Heizwendel (21) oder Heizröhre ausgebildet ist.

4. Vorrichtung (1) nach einem der vorangehenden Ansprüche, **dadurch gekennzeichnet, daß** sie eine Bodenplatte (31) aufweist, die mittels Halteklammern (33) mit der Außenwandung (3) lösbar verbunden ist.

5. Vorrichtung (1) nach einem der vorangehenden Ansprüche, **dadurch gekennzeichnet, daß** sie eine Wärmespeichereinrichtung (29) aufweist, die eine Heizwirkung ohne Stromzufuhr gewährleistet.

6. Vorrichtung (1) nach einem der vorangehenden Ansprüche, **dadurch gekennzeichnet, daß** die Außenwandung (3) ein wärmeisolierendes Material (7) aufweist.

7. Vorrichtung (1) nach einem der vorangehenden Ansprüche, **dadurch gekennzeichnet, daß** sich Innenwandung (10) und Außenwandung (3) nach unten hin konisch erweitern.

8. Vorrichtung (1) nach einem der vorangehenden Ansprüche, **dadurch gekennzeichnet, daß** sie einen Wärmesensor (25) aufweist.
